(19) Europäisches Patentamt

European Patent Office

Office européen des brevets

(11) EP 0 691 226 B1

## (12) FASCICULE DE BREVET EUROPEEN

(45) Date de publication et mention
de la délivrance du brevet:
**23.12.1998 Bulletin 1998/52**

(51) Int. Cl.⁶: $B60G\ 17/015$

(21) Numéro de dépôt: **95401550.9**

(22) Date de dépôt: **28.06.1995**

(54) **Amortisseur semi-actif**

Semiaktiver Schwingungsdämpfer

Semi-active shock absorber

(84) Etats contractants désignés:
**AT BE CH DE DK ES GB GR IE IT LI NL PT SE**

(30) Priorité: **06.07.1994 FR 9408337**

(43) Date de publication de la demande:
**10.01.1996 Bulletin 1996/02**

(73) Titulaire:
**GEC ALSTHOM TRANSPORT SA**
**75016 Paris (FR)**

(72) Inventeurs:
• **Boichot, Philippe**
**F-21800 Quetigny (FR)**
• **Kirat, Regis**
**F-71200 Le Creusot (FR)**

(74) Mandataire: **Gosse, Michel et al**
**ALSTOM FRANCE SA**
**Département de Propriété Industrielle,**
**38, avenue Kléber**
**75116 Paris (FR)**

(56) Documents cités:
WO-A-91/06439          DE-C- 4 103 188
FR-A- 2 660 705          FR-A- 2 667 907
US-A- 4 887 699

• LIVRE: FOELLINGER, O.:
"REGELUNGSTECHNIK: EINFUEHRUNG IN DIE
METHODEN UND IHRE ANWENDUNG",
DEUXIEME EDITION 1978, ELITERA VERLAG,
BERLIN (DE)

## Description

La présente invention concerne les lois de pilotage d'amortisseur hydraulique en général, et porte, plus particulièrement, sur un amortisseur semi-actif.

Les demandes de brevet français FR 2 660 705 et FR 2 667 907 de la société REGIE NATIONALE DES USINES RENAULT sont relatifs à un asservissement en effort de vérins hydrauliques de suspension d'automobile.

Les dispositifs décrits s'inscrivent dans le cadre des suspensions actives obtenues par application de la théorie de la commande optimale par minimisation de critères quadratiques.

La terminologie suspension active s'emploie pour des suspensions mettant en oeuvre une génération d'énergie, que ce soit hydraulique, pneumatique ou électrique avec un niveau de puissance important.

De plus, on parle de suspension semi-active lorsque la suspension possède des caractéristiques variables pilotées sans fourniture de puissance importante.

Une loi de commande prenant en compte les mesures par capteurs sur un véhicule traduisant les mouvements de ce dernier permet de calculer les efforts que les suspensions doivent appliquer à tout instant pour minimiser le critère retenu.

Ce critère peut se traduire par exemple par la recherche d'une réduction des vibrations ou encore par une limitation des débattements.

Les efforts ainsi calculés représentent les consignes d'effort que devront suivre les organes de suspension. Ces derniers agissent donc en générateurs d'efforts asservis, avec une boucle de contre-réaction négative en effort.

Dans le cas idéal, chaque asservissement d'effort correspondant à chacun des organes de suspension du véhicule est réalisé par un vérin hydraulique alimenté en haute pression, muni d'un capteur d'effort et d'une servovalve.

Une telle solution est par exemple décrite dans les demandes de brevet français FR 2 660 705 et FR 2 667 907.

Il découle de la demande de brevet FR 2 660 705 que le problème essentiel réside en la difficulté de réaliser un asservissement d'effort avec un vérin quand celui-ci est soumis à des mouvements de grande amplitude à relativement basse fréquence, ce qui est le cas dans le contexte d'une suspension automobile.

En d'autres termes, cette difficulté se traduit par une impédance fortement variable de la suspension automobile.

La demande brevet FR 2 660 705 décrit un correcteur de correction du courant de commande de servovalve basé sur la mesure de la vitesse relative entre les deux extrémités du vérin.

Le dispositif décrit dans la demande brevet FR 2 660 705 fait donc appel à un modèle inverse de la servovalve intégré dans une boucle de correction positive qui se superpose à la boucle de contre-réaction principale de l'asservissement d'effort.

Une autre caractéristique du dispositif de l'art antérieur est que le modèle inverse de servovalve utilisé prend en compte, outre la mesure de vitesse relative, la mesure de l'effort réalisé.

Le dispositif de l'art antérieur constitue une suspension active dans le sens où le dispositif comprend un système de génération hydraulique haute pression.

Un avantage de l'amortisseur semi-actif de l'invention est qu'il ne comporte pas de génération hydraulique, de ce fait le dispositif de l'invention constitue un dispositif semi-actif, car il y a une variation commandée de la loi d'amortissement produite.

De plus, une limitation des dispositifs d'amortissement conventionnels est que la loi d'amortissement présente une caractéristique unique figée par construction.

La WO-A-91/06439 décrit un amortisseur semi-actif commandé par un circuit de commande. Ce circuit présente comme entrées une consigne d'effort élaborée par un calculateur et une vitesse relative d'un piston de l'amortisseur. Dans une variante, une boucle de commande directe produit une tension pour commander une section de passage hydraulique de l'amortisseur par un diagramme caractéristique à partir de la vitesse relative et de la consigne d'effort. Dans une autre variante, une boucle de commande fermée produit une tension respective à partir de la différence entre la consigne d'effort et une force exercée calculé par simulation de l'amortisseur semi-active.

Le document "Regelungstechnik", deuxième édition, Elitera-Verlag, Berlin, 1978, pages 335-356, est relatif à la théorie linéaire des reconstructions d'état.

Un but de l'invention est un amortisseur semi-actif permettant d'améliorer le confort vibratoire d'un véhicule ferroviaire.

Un autre but de l'invention est un amortisseur semi-actif permettant d'améliorer le confort de véhicules ferroviaires déjà en exploitation, sous réserve d'implantation de l'électronique de commande.

Conformément à l'invention, l'amortisseur semi-actif commandé par un circuit de commande présente comme entrées une consigne d'effort Fc élaborée par un calculateur, une vitesse relative $\dot{y}$ entre deux extrémités de l'amortisseur et une force effective F exercée par l'amortisseur, ledit circuit de commande comportant une boucle de commande directe composée d'un modèle inverse simplifié de l'amortisseur, ledit modèle inverse de l'amortisseur déterminant une valeur du courant électrique théorique $i_{th}$ de commande d'une valve de compression et d'une valve de détente à partir d'une mesure d'une valeur de ladite vitesse relative $\dot{y}$ et d'une valeur de ladite consigne d'effort Fc, une boucle de

EP 0 691 226 B1

rétroaction en effort introduisant, audit courant électrique théorique $i_{th}$ de commande, un terme correctif $\delta i$ de type proportionnel de manière à tenir compte d'une erreur d'effort $\varepsilon F$ entre ladite valeur de consigne d'effort Fc et une valeur mesurée de la force effective F exercé.

L'invention a également pour objet un amortisseur semi-actif dans lequel le modèle inverse de l'amortisseur est défini par les expressions:

$$i_{th} = K_{23}\, \frac{|\dot{y}|}{\sqrt{|Fc|}},\ \text{en phase de détente}\ (\dot{y}>0),\ \text{et}$$

$$i_{th} = K_{13}\, \frac{|\dot{y}|}{\sqrt{|Fc|}},\ \text{en phase de compression}\ (\dot{y}<0).$$

Comme indiqué ci-dessus, un avantage de l'amortisseur semi-actif de l'invention est qu'il ne nécessite pas de source d'énergie, de pompe ou de compresseur.

Un autre avantage de l'amortisseur semi-actif de l'invention est le pilotage de la loi d'amortissement de l'amortisseur, ce qui permet de réaliser de façon continue une infinité de lois force-vitesse relative.

Un autre avantage de l'amortisseur semi-actif de l'invention est que l'organe amortisseur piloté se substitue à l'amortisseur conventionnel, moyennant des modifications dans le câblage électrique.

Un autre avantage de l'amortisseur semi-actif de l'invention est que le fonctionnement en mode dégradé s'apparente à celui d'un amortisseur conventionnel.

Un autre avantage de l'amortisseur semi-actif de l'invention est qu'il procure 20 à 50 pour cent d'amélioration du confort vibratoire suivant le type de véhicule équipé.

Un autre avantage de l'amortisseur semi-actif de l'invention découle de l'utilisation d'un modèle inverse de l'amortisseur.

L'utilisation d'un modèle inverse de l'amortisseur permet de déterminer le courant de commande de la servovalve à partir de la mesure de la vitesse relative et de la consigne d'effort et non, comme indiqué précédemment dans l'état de la technique, à partir de la mesure de la vitesse relative et de l'effort réalisé.

D'autres buts, caractéristiques et avantages de l'invention apparaîtront à la lecture de la description du mode de réalisation préféré de l'amortisseur semi-actif, description faite en liaison avec les dessins dans lesquels:

- la figure 1 représente un schéma de principe de l'amortisseur semi-actif piloté conforme à l'invention;
- la figure 2 représente un schéma de principe du circuit de commande de l'amortisseur semi-actif piloté conforme à l'invention.

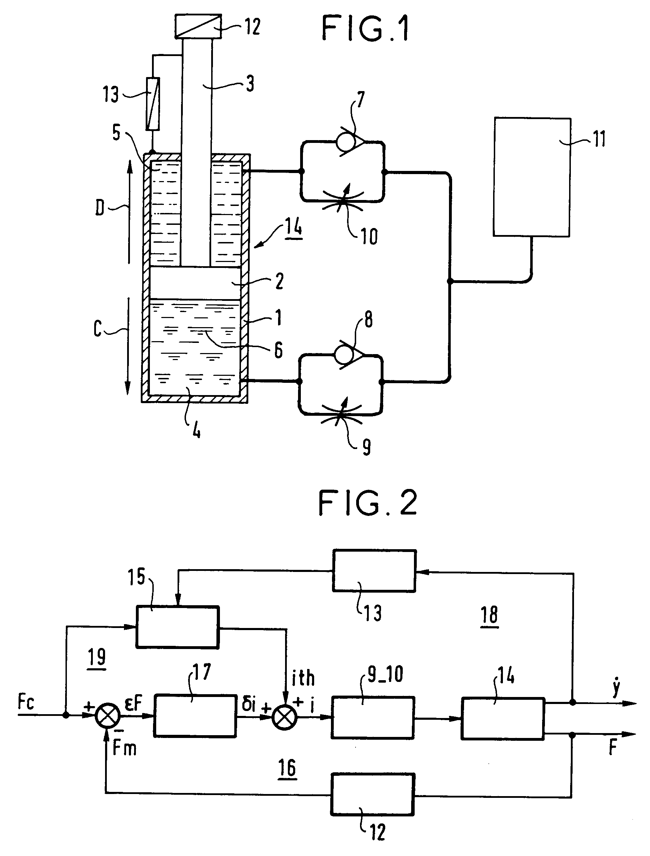

La figure 1 représente un schéma de principe de l'amortisseur semi-actif piloté conforme à l'invention.

L'amortisseur semi-actif piloté conforme à l'invention comporte un corps 1 dans lequel coulisse un piston 2 plein muni d'une tige 3 l'ensemble constituant un vérin 14.

Le piston 2 délimite une première chambre 4 dite chambre de compression et une seconde chambre 5 dite chambre de détente.

Le corps 2 est rempli d'un fluide 6, par exemple d'huile hydraulique.

L'amortisseur semi-actif comprend également un premier clapet anti-retour 7 dit clapet de compression et un second clapet anti-retour 8 dit clapet de détente.

Une première valve hydraulique 9 dite valve de compression et une seconde valve hydraulique 10 dite valve de détente sont pilotées électriquement.

L'amortisseur semi-actif comprend également un accumulateur 11 oléopneumatique préchargé constitué d'une chambre.

Un tel accumulateur 11 oléopneumatique forme un volume fixe comprenant un gaz inerte sous pression et de l'huile hydraulique à laquelle le gaz communique sa pression.

Les deux fluides sont généralement séparés physiquement par une membrane ou une vessis.

La fonction de cet accumulateur consiste, d'une part, à absorber le volume d'huile correspondant au volume de la tige lorsque l'amortisseur est complètement comprimé et, d'autre part, à assurer une pression minimale dans le circuit hydraulique.

Le clapet de compression 7 et la valve de détente 10 sont montés en parallèle et sont disposés entre la chambre de détente 5 et la chambre de l'accumulateur 11.

Le clapet de détente 8 et la valve de compression 9 sont montés en parallèle et sont disposés entre la chambre de compression 4 et la chambre de l'accumulateur 11.

3

Enfin, l'amortisseur semi-actif comprend un capteur de force 12 et un capteur de vitesse relative 13.

La figure 2 représente un schéma de principe de la commande de l'amortisseur semi-actif piloté conforme à l'invention.

Les références utilisées dans cette figure 2 et leur signification sont indiquées ci-après:

Fc: consigne de force,
F: force effective,
Fm: mesure par capteur de la force effective F,
$\varepsilon$F: erreur d'effort, $\varepsilon$F=Fc-Fm,
$\dot{y}$: vitesse relative entre les deux extrémités de l'amortisseur,
i: courant électrique de commande des valves,
$i_{th}$: courant de commande théorique déterminée par le modèle inverse et à appliquer aux vannes hydrauliques pour obtenir l'efford Fc,
$\delta$i: correction supplémentaire à $i=i_{th}+\delta i$ pour tenir compte de l'erreur d'effort $\varepsilon$F.

Le fonctionnement hydraulique de l'amortisseur semi-actif piloté conforme à l'invention est décrit ci-après en liaison avec les figures 1 et 2.

On distingue deux phases dans le fonctionnement hydraulique de l'amortisseur semi-actif piloté de l'invention:

- une première phase dite phase de compression, symbolisée sur la figure 1 par la flèche C, et
- une phase dite phase de détente, symbolisée sur la figure 1 par la flèche D.

Lors de la phase de compression le piston 2 pénètre dans le corps 1 du vérin et lors de la phase de détente le piston 2 sort du corps 1 du vérin.

En phase dite de compression, le fluide 6 contenue dans la chambre de compression 4 est comprimé. Le clapet anti-retour de détente 8 est bloqué, ce qui force le fluide à passer par la valve de compression 9.

Le clapet anti-retour de compression 7 permet au fluide 6 de court-circuiter la valve de détente 10 et de remplir librement la chambre de détente 5.

Le pilotage de la valve de compression 9 permet de contrôler le niveau de pression dans la chambre de compression 4 et donc de contrôler l'effort de réaction exercé en compression.

En phase dite de détente, le rôle des organes est inversé.

La valve de détente 10 contrôle le passage du fluide 6 de la chambre de détente 5 vers la chambre de l'accumulateur 11, ce qui permet de moduler l'effort de détente.

Le clapet de détente 8 est actif et laisse libre le passage du fluide 6 de la chambre de détente 5 vers la chambre de l'accumulateur 11.

Les valves de compression 9 et de détente 10 sont pilotées de préférence électriquement de façon à moduler l'effort d'amortissement qui est toujours opposé à la vitesse.

Il résulte de ce qui précède que l'amortissement reste un système dissipatif.

La modulation de l'effort exercé permet d'asservir cet effort à une consigne d'effort Fc élaborée par un calculateur (non représenté).

Le problème de base consiste à déterminer le courant de commande i à appliquer aux valves de compression 9 et de détente 10 pour réaliser la consigne d'effort Fc.

L'exploitation des relations qui traduisent l'équilibre des débits volumiques de chaque chambre de l'amortisseur à vitesse constante, et ce pour les phases de compression et de détente, à permis de déduire une relation simple entre le courant $i_{th}$ délivré par un modèle inverse 15 de l'amortisseur, la vitesse relative instantanée $\dot{y}$ et l'effort d'amortissement.

Cette relation est par exemple donnée par la formule suivante, en phase de détente:

$$F = \frac{\rho}{2}(\frac{S_2}{Gi.i})^2 \cdot S_2 \cdot \dot{y}^2 + \frac{\rho}{2}(\frac{S_1}{Cd.A_{31}(\Delta P_{31}})^2 \cdot S_1 \dot{y}^2 - (P_3 - Pe) \cdot St$$

où:

F est l'effort d'amortissement exercé,
$\rho$ la masse volumique de l'huile,
$S_1$ la section du piston, côté sans tige, soumise à la pression,
$S_2$ la section du piston, côté tige, soumise à la pression,

St      la section de la tige,

$\dot{y}$      la vitesse relative,

Gi      le gain en pression de la valve de commande,

i      le courant de commande,

Cd      le coefficient de débit du clapet antiretour de détente,

$A_{31}$      la section de passage géométrique du clapet anti-retour de détente,

$\Delta P_{31}$      la perte de charge entre l'accumulateur et la chambre mise en dépression,

$P_3$      la pression dans l'accumulateur et

Pe      la pression atmosphérique.

L'exploitation de ce modèle d'amortisseur, dans le sens où, en fonction de l'effort désiré Fc et de la vitesse mesurée $\dot{y}$, on cherche le courant $i_{th}$ à appliquer aux organes de commande, revient à exploiter un modèle inverse 15 de l'amortisseur.

Du fait des simplifications dans l'établissement de la loi d'amortissement et donc dans le modèle inverse 15 de l'amortissement, un terme correctif $\delta i$ de type proportionnel est introduit par le biais d'une boucle de rétro-action 16 en effort.

Cette boucle de rétroaction 16 permet, par la mesure Fm, au moyen du capteur de force 12 de l'effort F exercé, de réaliser le signal d'erreur $\epsilon F$ entre la force de consigne Fc et la force mesurée Fm.

Ce signal d'erreur $\epsilon F$ est appliqué à un correcteur 17, lequel délivre la correction supplémentaire $\delta i$ au courant de commande i des valves 9, 10.

La valeur de la vitesse relative $\dot{y}$ est introduite dans le modèle inverse 15 de l'amortisseur par le biais d'une boucle de rétroaction 18 en vitesse.

La boucle de rétro-action 18 en vitesse inclue le capteur de vitesse 13.

La valeur du courant théorique $i_{th}$ de commande est déterminée par le modèle inverse 15 de l'amortisseur.

Ce courant théorique $i_{th}$ de commande est appliqué aux valves hydrauliques, pour obtenir l'effort Fc, par le biais d'une boucle de commande directe 19.

La boucle de commande directe 19 inclue le modèle inverse 15 de l'amortisseur lequel est défini, par exemple, par les expressions:

$$i_{th} = K_{23} \frac{|\dot{y}|}{\sqrt{|Fc|}}, \text{ en phase de détente } (\dot{y}>0), \text{ et}$$

$$i_{th} = K_{13} \frac{|\dot{y}|}{\sqrt{|Fc|}}, \text{ en phase de compression } (\dot{y}<0),$$

où $K_{13}$ et $K_{23}$ sont des constantes positives dépendant de la taille du vérin, des caractéristiques physiques de l'huile ainsi que du gain en débit des valves hydrauliques.

L'amortisseur semi-actif de l'invention trouve une application en tant que suspension secondaire transversale d'un véhicule ferroviaire de transport de voyageurs.

**Revendications**

1.  Amortisseur semi-actif commandé par un circuit de commande présentant comme entrées une consigne d'effort Fc élaborée par un calculateur, une vitesse relative $\dot{y}$ entre deux extrémités de l'amortisseur et une force effective F exercée par l'amortisseur, ledit circuit de commande comportant une boucle de commande directe (19) composée d'un modèle inverse (15) simplifié de l'amortisseur, ledit modèle inverse (15) de l'amortisseur déterminant une valeur d'un courant électrique théorique $i_{th}$ de commande d'une valve de compression (9) et d'une valve de détente (10) à partir d'une mesure d'une valeur de ladite vitesse relative $\dot{y}$ et d'une valeur de ladite consigne d'effort Fc, une boucle de rétroaction (16) en effort introduisant, audit courant électrique théorique $i_{th}$ de commande, un terme correctif $\delta i$ de type proportionnel de manière à tenir compte d'une erreur d'effort $\epsilon F$ entre ladite valeur de consigne d'effort Fc et une valeur mesurée de la force effective F exercée.

2.  Amortisseur semi-actif selon la revendication 1, dans lequel ledit modèle inverse (15) de l'amortisseur est défini par les expressions:

$$i_{th} = K_{23} \frac{|\dot{y}|}{\sqrt{|Fc|}}, \text{ en phase de détente } (\dot{y}>0), \text{ et}$$

$$i_{th} = K_{13} \frac{|\dot{y}|}{\sqrt{|Fc|}}, \text{ en phase de compression } (\dot{y}<0),$$

où $K_{13}$ et $K_{23}$ sont des constantes positives dépendant de la taille du vérin, des caractéristiques physiques de l'huile ainsi que du gain en débit des valves hydrauliques.

## Claims

1. A semi-active damper controlled by a control circuit receiving as inputs a force reference Fc generated by a computer, and a relative speed $\dot{y}$ between two ends of the damper, said control circuit including a direct control loop (19) constituted by a simplified inverse model of the damper, said inverse model (15) of the damper determining a value for an ideal control electrical current $i_{th}$ for controlling a compression controlled-restriction valve (9) and an expansion controlled-restriction valve (10) on the basis of a measured value for said relative speed $\dot{y}$ and on the basis of a value of said force reference Fc; a force feedback (16) including a proportional type corrective term $\delta i$ in said ideal control electrical current $i_{th}$ so as to take account of a force error $\varepsilon F$ between said force reference value Fc and a measured value for the force F actually exerted.

2. A semi-active damper according to claim 1, in which said inverse model (15) of the damper is defined by the expressions:

$$i_{th} = K_{23} \frac{|\dot{y}|}{\sqrt{|Fc|}}, \text{ in expansion } (\dot{y} > 0); \text{ and}$$

$$i_{th} = K_{13} \frac{|\dot{y}|}{\sqrt{|Fc|}}, \text{ in compression } (\dot{y} < 0)$$

where $K_{13}$ and $K_{23}$ are positive constants that depend on the size of the actuator, on the physical characteristics of the oil, and also on the flow rate response of the hydraulic controlled-restriction valves.

## Patentansprüche

1. Semiaktiver Schwingungsdämpfer, der von einer Steuerschaltung gesteuert wird, die als Eingangswerte eine Sollkraft Fc, die mit einem Rechner ermittelt wird, eine relative Geschwindigkeit $\dot{y}$ zwischen zwei äußeren Enden des Schwingungsdämpfers und eine effektive Kraft F hat, die von dem Schwingungsdämpfer ausgeübt wird, wobei die Steuerschaltung eine direkte Steinerschieife (19) umfaßt, die durch ein vereinfachtes, inverses Modell (15) des Schwingungsdämpfers gebildet ist, wobei das inverse Modell (15) des Schwingungsdämpfers einen Wert eines theoretischen elektrischen Steuerstromes $i_{th}$ eines Kompressionsventils (9) und eines Druckentlastungsventils (10) anhand einer Messung eines Wertes der besagten relativen Geschwindigkeit $\dot{y}$ und eines Wertes der besagten Sollkraft Fc bestimmt, wobei eine Kraft-Rückkopplungsschleife (16) zu dem theoretischen elektrischen Steuerstrom ich einen Korrekturterm $\delta i$ von proportionalem Typ hinzufügt, um einen Kraftfehler $\varepsilon F$ zwischen dem besagten Kraftsollwert Fc und einem gemessenen Wert der effektiv ausgeübten Kraft F zu berücksichtigen.

2. Semiaktiver Schwingungsdämpfer nach Anspruch 1, bei dem das besagte inverse Modell (15) des Schwingungsdämpfers durch die Ausdrücke:

$$i_{th} = K_{23} \frac{|\dot{y}|}{\sqrt{|Fc|}} \text{ in der Druckenlastungsphase } (\dot{y}<0), \text{ und}$$

$$i_{th} = K_{13} \frac{|\dot{y}|}{\sqrt{|Fc|}} \text{ in der Kompressionsphase } (\dot{y}<0)$$

definiert ist, wo $K_{13}$ und $K_{23}$ positive Konstanten sind, die von der Größe des Zylinders, den physikalischen Eigenschaften des Öls sowie dem Gewinn an Durchsatz der hydraulischen Ventile abhängen.

# FIG.1

# FIG.2